# EUROPEAN PATENT SPECIFICATION

(11) **EP 1 312 506 B1**
(45) Date of publication and mention of the grant of the patent: **14.12.2005**
(21) Application number: 02024147.7
(22) Date of filing: 30.10.2002
(51) Int. Cl.: B60Q 1/52, G01S 13/93, G01S 11/12

(54) **A method and system for assisting the driver of a motor vehicle in a lane-change manoeuvre**
Fahrerassistenz-Methode und -Verfahren bei Kfz-Spurwechselverfahren
Méthode et procédé d'assistance du conducteur d'un véhicule automobile dans les manoeuvres de changement de voie

(30) Priority: 07.11.2001 IT TO20011057
(43) Date of publication of application: 21.05.2003
(73) Proprietor: C.R.F. Società Consortile per Azioni, 10043 Orbassano (Torino) (IT)
(72) Inventor: Vivo, Giulio, 43100 Parma (IT); Antonello, Pier Claudio, 10060 Frossasco (Torino) (IT); Burzio, Gianfranco, 10022 Carmagnola (Torino) (IT)
(74) Representative: Notaro, Giancarlo

(56) References cited:
- EP-A- 0 591 743
- EP-A- 1 077 161
- WO-A-01/61371
- WO-A-01/85491
- DE-A- 19 801 884
- US-A- 4 987 357
- US-A- 5 001 558
- US-A- 6 038 496
- PATENT ABSTRACTS OF JAPAN vol. 2000, no. 02, 29 February 2000 (2000-02-29) & JP 11 321495 A (YAZAKI CORP), 24 November 1999 (1999-11-24)

## Description

The present invention relates to a method and a system for assisting the driver of a motor vehicle in a lane-change manoeuvre, by signalling the emergency condition generated by the approach of another motor vehicle along the same lane onto which the first motor vehicle is moving.

In recent years, there have already been proposed a large number of devices for signalling to a motor vehicle that is in front the approach of a motor vehicle that is following, during overtaking. Such devices tend to improve driving safety as compared to what can be achieved with traditional rear-view mirrors, which leave a part of the area behind the vehicle, the so-called "blind angle", out of the field of vision.

Devices of the type referred to above are, for example, illustrated in the European patent EP-B-0 443 185, in the European patent application EP-A-0 454 516, and in the European patent application EP-A-0 381 016. Such devices generally make use of sensor means of various types, in general of an active type, which detect the distance between the vehicle that is in front and the vehicle that is following. It has also already been proposed (EP-A-0 591 743) to use sensor means consisting of a passive opto-electrical sensor of the CCD type.

A method as set forth in the pre-characterizing portion of claim 1 and a system as set forth in the pre-characterizing portion of claim 3 are known from WO-A-0161371

The purpose of the present invention is to improve further the performance of the known devices, enabling, in particular, a greater driving safety for the driver.

With a view to achieving this purpose, the subject of the invention is a method according to claim 1 and a system according to claim 3.

According to the invention, the aforesaid alarm signal comprises an optical signal on the dashboard on board the motor vehicle or in the proximity of the external rear-view mirror, outside or inside the vehicle, but becomes also an acoustic signal when the electronic processing means detect the activation, by the driver, of the direction indicator of the motor vehicle, which indicates the intention of the driver to change lane.

The sensor means typically consist of a digital telecamera, preferably a colour camera. The use of a colour telecamera improves the robustness of the signal and the capacity for operating correctly in all environmental conditions and for eliminating disturbances due to possible shadows of the vehicle itself or of other surrounding objects. Currently available technology of digital telecameras enables integration of said component in the glass of the external rear-view mirror of the motor vehicle. A further advantage deriving from the use of the digital telecamera lies in the fact that the aforesaid electronic processing means can be completely digital. The device can be connected to the on-board network (CAN/LIN) to simplify the wiring and increase the number of functions obtainable.

In addition to the functions outlined above, the electronic processing means can be arranged for comprising various other functions, such as signalling of other vehicles overtaking with the vehicle stationary, signalling of other vehicles overtaking at low speeds, i.e., lower than 25 km/h, the detection of vehicles that are approaching from behind at night, and automatic activation of the rear fog-lights in the event of poor visibility and their de-activation, again in the same conditions, following upon detection of vehicles that are following at a short distance.

Preferably, a further alarm signal is generated when an excessive approach to the edge of the lane is detected, in the absence of activation of the direction indicator, as warning of unintentional exit from the lane.

Of course, the subject of the invention is also the system that implements the method described above.

Further characteristics and advantages of the invention will emerge clearly from the ensuing description, with reference to the annexed drawings, which are provided purely by way of non-limiting example and in which:
- Figure **1** is a view from above of a road traversed by a motor vehicle equipped with the system according to the invention,
- Figure **2** is a schematic front view of an external rear-view mirror of a motor vehicle equipped with the sensor means forming part of the invention, and
- Figure **3** is a block diagram of the system according to the invention.

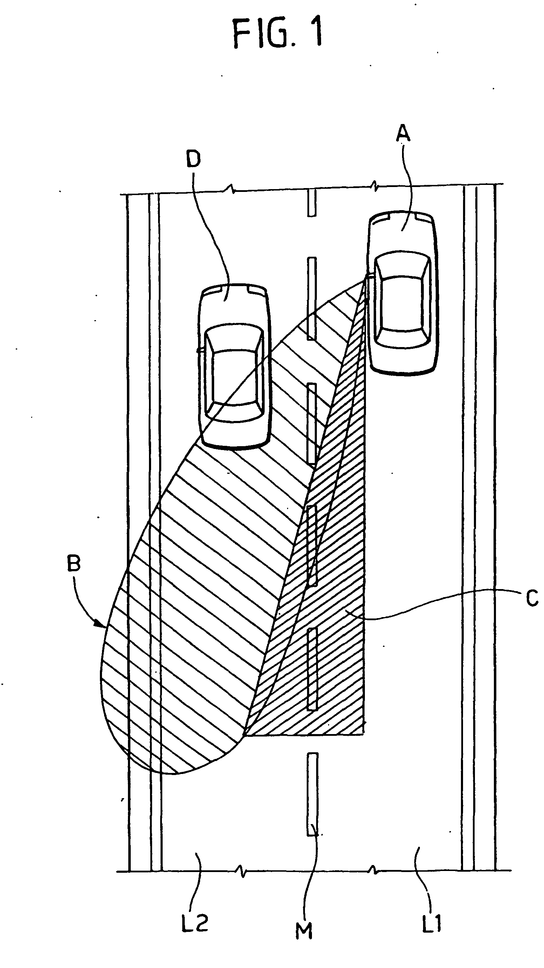

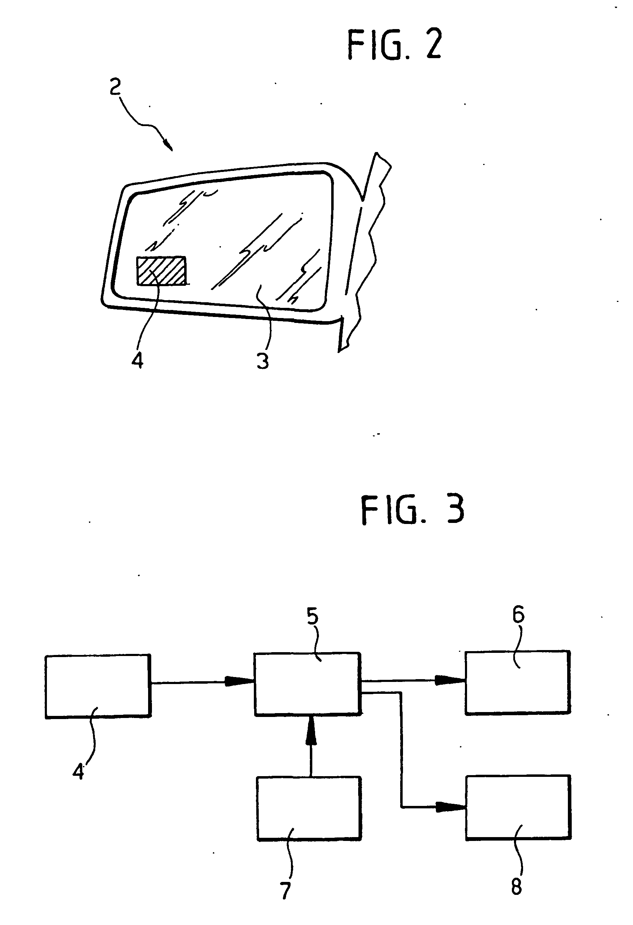

With reference to Figures 1 and 2, a motor vehicle A has an external rear-view mirror 2, in the reflecting plate 3 of which there is incorporated an opto-electronic sensor consisting of a digital telecamera 4 made using CMOS technology. Alternatively, the telecamera 4 can be integrated in the body of the mirror or on its support fixed to the vehicle. The telecamera 4 has a field of vision defined by the area B in Figure 1, which increases considerably the driving safety, if it is taken into account that the field of vision of the rear-view mirror alone is the one indicated by the area C.

With reference to Figure 3, the signals emitted by the sensor 4 are sent to an electronic processing circuit 5, which sees to processing said signals in a completely digital way. The circuit 5 carries out a series of sensing operations in a way similar to what has already been obtained by known devices, such as for example the measurement of the distance between the vehicle A and a vehicle that is following D, during overtaking. However, according to the invention, the electronic processing means 5 are moreover provided for detecting the lateral distance existing between the motor vehicle A and the adjacent side M of the lane L1 on which the motor vehicle A is travelling.

The electronic processing means 5 are provided for activating an optical-alarm signaller 6, provided on the dashboard of the vehicle or in the proximity of the external rear-view mirror, outside or inside the vehicle, in the case where the processing means 5 detect approach of the motor vehicle A to the edge M of the lane L1 in concomitance with approach of a vehicle that is following D along the lane L2 onto which the motor vehicle A intends to shift its position. In the case where, in the aforesaid conditions, the electronic processing means 5 detect also the activation, by the driver, of the control member 7, which causes switching-on of the direction indicators, or else an excessive approach to the edge of the lane (both phenomena constituting definite signs of the intention of the driver to change lane), the electronic processing means 5 control a further alarm signaller 8, this time of an acoustic type.

Of course, the electronic processing means can be programmed in various ways. For example, it is possible to envisage that a first alarm signal will be generated when the lateral distance between the motor vehicle and the edge M of the lane drops below a pre-determined value. Or else, it would be possible to envisage that said signal will be generated as soon as a lateral approach of the motor vehicle to the edge of the lane is detected, irrespective of the distance existing from said edge. Yet again, it would be possible to envisage that the aforesaid function will exist only in the case of an approach towards the left-hand side of the lane, or else towards either side.

As already referred to above, the use of a digital telecamera, made using CMOS technology, enables production of the device with smaller dimensions, reduction in costs, and use of completely digital processing devices.

Preferably, the digital telecamera is a colour camera, in so far as the use of colour improves the robustness of the signal and the capacity for operating correctly in all environmental conditions, as well as eliminating disturbances due to possible shadows of the vehicle itself or of other surrounding objects. Given its contained overall dimensions, the sensor can be integrated directly in the glass of the rear-view mirror or, in any case, in the body of the mirror or in its supporting base.

Of course, without prejudice to the principle of the invention, the constructional details and the embodiments may be amply varied with respect to what is described and illustrated herein purely by way of example, without thereby departing from the scope of the present invention as defined in the claims.

## Claims

1. A method for assisting the driver of a motor vehicle in a lane-change manoeuvre, by signalling the emergency condition generated by the approach of another motor vehicle along the same lane onto which the first motor vehicle is moving,
method including:
- providing passive digital opto-electronic sensor means (4), of the CMOS type, on the external rear-view mirror (2) of the first motor vehicle,
- processing the signals emitted by said sensor means (4) for the position of the motor vehicle (A) with respect to the side (M) closest to the lane (L1) on which it is travelling,
- processing the signals emitted by said sensor means (4) for detecting when a vehicle (D) that is following is approaching on the lane (L2) adjacent to said side (M) of the lane (L1) on which the first motor vehicle (A) is travelling, and
- generating an alarm signal (6, 8) when approach of the vehicle (D) that is following in concomitance with a lateral approach of the first vehicle (A) towards the aforesaid adjacent lane (L2) is detected,
- wherein the alarm signal is an optical signal,
- **characterized in that** the alarm signal becomes an acoustic signal when an activation of the direction indicator by the driver is detected, which is interpreted as a definite sign of the intention of the driver to change lane.

2. The method according to Claim 1, **characterized in that** a further alarm signal is generated when an excessive approach to the edge of the lane is detected, in the absence of activation of the direction indicator, as warning of unintentional exit from the lane.

3. A system for assisting the driver of a motor vehicle (A) in a lane-change manoeuvre, by signalling the emergency condition generated by the approach of another motor vehicle (D) along the same lane (L2) onto which the first motor vehicle (A) is moving, said system including :
- passive digital opto-electronic sensor means (4), of the CMOS type, provided on the external rear-view mirror (2) of the first motor vehicle (A),
- electronic processing means (5) for processing the signals emitted by said sensor means (4) with the aim of detecting the position of the motor vehicle with respect to the side (M) closest to the lane (L1) on which it is travelling,
- said electronic processing means (5) being designed for processing the signals emitted by said sensor means (4) for detecting when a motor vehicle that is following (D) is approaching on the lane (L2) adjacent to said side (M) of the lane (L1) on which the first motor vehicle (A) is travelling, and
- said electronic processing means being designed for generating an alarm signal when they detect an approach of the motor vehicle that is following (D) in concomitance with a lateral approach of the first motor vehicle (A) to said adjacent lane,
wherein said alarm signal is an optical signal,
**characterized in that** said alarm signal becomes also an acoustic signal when the electronic processing means (5) detect activation of the control member (7) of the direction indicator of the motor vehicle, which is interpreted as a definite sign of the intention of the driver to change lane.

4. The system according to Claim 3, **characterized in that** a further alarm signal is generated when an excessive approach to the edge of the lane is detected, in the absence of activation of the direction indicator, as warning of unintentional exit from the lane.

5. The system according to Claim 3, **characterized in that** said sensor means consist of a digital telecamera (4).

6. The system according to Claim 5, **characterized in that** the aforesaid digital telecamera is a colour camera.

7. The system according to Claim 3, **characterized in that** the aforesaid processing means are of a completely digital type.

## Patentansprüche

1. Verfahren, mit dem der Fahrer eines Kraftfahrzeugs bei einem Fahrspurwechselmanöver unterstützt wird, indem der Notzustand signalisiert wird, der durch die Annäherung eines anderen Kraftfahrzeugs auf der gleichen Fahrspur entsteht, auf die sich das erste Kraftfahrzeug bewegt,
wobei das Verfahren einschließt:
Bereitstellen einer passiven digitalen optoelektronischen Sensoreinrichtung (4) vom CMOS-Typ an dem Außen-Rückspiegel (2) des ersten Kraftfahrzeugs,
Verarbeiten der Signale, die von der Sensoreinrichtung (4) für die Position des Kraftfahrzeugs (A) in Bezug auf die Seite (M) emittiert werden, die am nächsten an der Fahrspur (1) liegt, auf der es fährt,
Verarbeiten der von der Sensoreinrichtung (4) emittierten Signale, um zu erfassen, wenn ein Fahrzeug (D), das folgt, sich auf der Fahrspur (L2) nähert, die an die Seite (M) der Fahrspur (L1) angrenzt, auf der das erste Kraftfahrzeug (A) fährt, und
Erzeugen eines Warnsignals (6, 8), wenn Annäherung des Fahrzeugs (D), das folgt, zusammen mit einer seitlichen Annäherung des ersten Fahrzeugs (A) an die angrenzende Fahrspur (L2) erfasst wird,
wobei das Warnsignal ein optisches Signal ist,
**dadurch gekennzeichnet, dass** das Warnsignal ein akustisches Signal wird, wenn eine Betätigung des Richtungsanzeigers durch den Fahrer erfasst wird, die als eindeutiges Zeichen der Absicht des Fahrers zum Fahrspurwechsel interpretiert wird.

2. Verfahren nach Anspruch 1, **dadurch gekennzeichnet, dass**, wenn eine zu starke Annäherung an den Rand der Fahrspur ohne Betätigung des Richtungsanzeigers erfasst wird, ein weiteres Warnsignal als Warnung vor unbeabsichtigtem Verlassen der Fahrspur erzeugt wird.

3. System, mit dem der Fahrer eines Kraftfahrzeugs (A) bei einem Fahrspurwechselmanöver unterstützt wird, indem es den Notzustand signalisiert, der durch die Annäherung eines anderen Kraftfahrzeugs (D) auf der gleichen Fahrspur (2) entsteht, auf die sich das erste Kraftfahrzeug (A) bewegt, wobei das System enthält:
eine passive digitale optoelektronische Sensoreinrichtung (4) vom CMOS-Typ, die an dem Außen-Rückspiegel (2) des ersten Kraftfahrzeugs (A) vorhanden ist,
eine elektronische Verarbeitungseinrichtung (5), die die von der Sensoreinrichtung (4) emittierten Signale verarbeitet, um die Position des Kraftfahrzeugs in Bezug auf die Seite (M) zu erfassen, die am nächsten an der Fahrspur (1) liegt, auf der es fährt,
wobei die elektronische Verarbeitungseinrichtung (5) so ausgeführt ist, dass sie die von der Sensoreinrichtung (4) emittierten Signale verarbeitet, um zu erfassen, wenn ein Kraftfahrzeug (D), das folgt, sich auf der Fahrspur (L2) nähert, die an die Seite (M) der Fahrspur (L1) angrenzt, auf der das erste Kraftfahrzeug (A) fährt, und
die elektronische Verarbeitungseinrichtung so ausgeführt ist, dass sie ein Warnsignal erzeugt, wenn sie eine Annäherung des Kraftfahrzeugs (D), das folgt, zusammen mit einer seitlichen Annäherung des ersten Kraftfahrzeugs (2) an die angrenzende Fahrspur erfasst,
wobei das Warnsignal ein optisches Signal ist,
**dadurch gekennzeichnet, dass** das Warnsignal auch ein akustisches Signal wird, wenn die elektronische Verarbeitungseinrichtung (5) Betätigung des Bedienelementes (7) des Richtungsanzeigers des Kraftfahrzeugs erfasst, die als eindeutiges Zeichen der Absicht des Fahrers zum Fahrspurwechsel interpretiert wird.

4. System nach Anspruch 3, **dadurch gekennzeichnet, dass**, wenn eine zu starke Annäherung an den Rand der Fahrspur ohne Betätigung des Richtungsanzeigers erfasst wird, ein weiteres Warnsignal als Warnung vor unbeabsichtigtem Verlassen der Fahrspur erzeugt wird.

5. System nach Anspruch 3, **dadurch gekennzeichnet, dass** die Sensoreinrichtung aus einer digitalen Fernsehkamera (4) besteht.

6. System nach Anspruch 5, **dadurch gekennzeichnet, dass** die digitale Fernsehkamera eine Farbkamera ist.

7. System nach Anspruch 3, **dadurch gekennzeichnet, dass** die Verarbeitungseinrichtung vollständig digital ist.

## Revendications

1. Procédé pour assister le conducteur d'un véhicule automobile dans une manoeuvre de changement de voie, en signalant la condition d'urgence générée par le rapprochement d'un autre véhicule automobile sur la même voie que celle sur laquelle le premier véhicule automobile se déplace, ledit procédé comprenant :
- la mise en oeuvre d'un moyen de capteur opto-électronique numérique passif (4), de type CMOS, sur le rétroviseur extérieur (2) du premier véhicule automobile,
- le traitement des signaux émis par ledit moyen de capteur (4) pour la position du véhicule automobile (A) par rapport au côté (M) le plus proche de la voie (L1) sur laquelle il se déplace,
- le traitement des signaux émis par ledit moyen de capteur (4) pour détecter quand un véhicule (D) qui suit se rapproche de la voie (L2) adjacente au dit côté (M) de la voie (L1) sur laquelle le premier véhicule automobile (A) se déplace, et
- la génération d'un signal d'alarme (6, 8) quand le rapprochement du véhicule (D) qui suit, concomitant au rapprochement latéral du premier véhicule (A) vers la voie adjacente (L2) susmentionnée, est détecté,
- dans lequel le signal d'alarme est un signal optique,
- **caractérisé en ce que** le signal d'alarme devient un signal acoustique quand une activation du clignotant par le conducteur est détectée, qui est interprétée comme un signe clair de l'intention du conducteur de changer de voie.

2. Procédé selon la revendication 1, **caractérisé en ce qu'**un autre signal d'alarme est généré quand un rapprochement excessif du bord de la voie est détecté, en l'absence d'une activation du clignotant, en avertissement de la sortie involontaire de la voie.

3. Système pour assister le conducteur d'un véhicule automobile (A) dans une manoeuvre de changement de voie, en signalant la condition d'urgence générée par le rapprochement d'un autre véhicule automobile (D) le long de la même voie (L2) que celle sur laquelle le premier véhicule automobile (A) se déplace, ledit système comprenant :
- un moyen de capteur opto-électronique numérique passif (4), de type CMOS, placé sur le rétroviseur extérieur (2) du premier véhicule automobile (A),
- un moyen de traitement électronique (5) pour traiter les signaux émis par ledit moyen de capteur (4) dans le but de détecter la position du véhicule automobile par rapport au côté (M) le plus proche de la voie (L1) sur laquelle il se déplace,
- ledit moyen de traitement électronique (5) étant conçu pour traiter les signaux émis par ledit moyen de capteur (4) pour détecter lorsqu'un véhicule automobile qui suit (D) se rapproche de la voie (L2) adjacente au dit côté (M) de la voie (L1) sur laquelle le premier véhicule automobile (A) se déplace, et
- ledit moyen de traitement électronique (5) étant conçu pour générer un signal d'alarme quand il détecte le rapprochement du véhicule automobile qui suit (D) en concomitance avec un rapprochement latéral du premier véhicule automobile (A) de ladite voie adjacente,
dans lequel ledit signal d'alarme est un signal optique,
**caractérisé en ce que** ledit signal d'alarme devient également un signal acoustique quand le moyen de traitement électronique (5) détecte l'activation de l'élément de contrôle (7) du clignotant du véhicule automobile, qui est interprétée comme un signe clair de l'invention du conducteur de changer de voie.

4. Système selon la revendication 3, **caractérisé en ce qu'**un autre signal d'alarme est généré quand un rapprochement excessif du bord de la voie est détecté, en l'absence d'activation du clignotant, comme un avertissement d'une sortie involontaire de la voie.

5. Système selon la revendication 3, **caractérisé en ce que** ledit moyen de capteur est composé d'une caméra numérique (4).

6. Système selon la revendication 5, **caractérisé en ce que** la caméra numérique susmentionnée est une caméra couleur.

7. Système selon la revendication 3, **caractérisé en ce que** le moyen de traitement susmentionné est de type totalement numérique.
